# EUROPEAN PATENT APPLICATION

(11) **EP 4 571 430 A1**
(43) Date of publication of application: **18.06.2025**
(21) Application number: 23215928.5
(22) Date of filing: 12.12.2023
(51) Int. Cl.: G04F 5/14, B82B 1/00, B82B 3/00, B82Y 10/00, G01C 19/60, G01R 33/26, G06N 10/40

(54) **DEVICES FOR CONTROLLING TRAPPED ATOMS AND METHODS FOR MANUFACTURING THEREOF**

(71) Applicant: Infineon Technologies Austria AG, 9500 Villach (AT)
(72) Inventor: MEGIER, Nina Agnieszka, 9500 Villach (AT); COLOMBE, Yves, 9500 Villach (AT); AUCHTER, Silke Katharina, 9500 Villach (AT)
(74) Representative: Lambsdorff & Lange Patentanwälte Partnerschaft mbB

(57) **Abstract**

A device for controlling trapped atoms includes a structured electrode layer, wherein the structured electrode layer forms multiple electrodes of an atom trap configured to trap atoms in a processing zone above the structured electrode layer. The device further includes at least four wires arranged in one or more metal layers beneath the structured electrode layer. The wires surround the processing zone and each of the wires comprises a first portion configured to carry an electrical current in a direction towards the processing zone and a second portion configured to carry the electrical current in a direction away from the processing zone.

## Description

### Technical Field

The present disclosure relates to devices for controlling trapped atoms. In addition, the present disclosure relates to methods for manufacturing such devices.

### Background

Trapped atoms (or more particular trapped ions) are one of the most promising candidates for being used as qubits in quantum computers, since they can be trapped with long lifetimes in a scalable array by means of electromagnetic fields. In order to perform quantum information processing with trapped atoms, the qubits formed by the atoms may be controlled using electromagnetic radiation. In some examples, laser beams may be aligned with each individual atom, and by controlling the frequency, phase and amplitude of the lasers, the qubits may be manipulated. In further examples, microwave radiation may be used instead of laser beams for performing quantum information processing. In these cases, many atoms may be irradiated using a single microwave source. A necessary component of such microwave approach may be the provision of a magnetic field gradient in the processing zone.

Manufacturers and developers of devices for controlling trapped atoms are constantly striving to improve their products. In particular, it may be desirable to provide atom trap devices providing suitable magnetic field gradients that satisfy specific properties, such as (inter alia) good localization of the magnetic field and different magnetic field amplitudes along the locations of the trapped atoms. In addition, it may be desirable to develop solutions providing a straightforward and easy scaling of the atom trap devices in order to trap more atoms.

### Summary

An aspect of the present disclosure relates to a device for controlling trapped atoms. The device comprises a structured electrode layer, wherein the structured electrode layer forms multiple electrodes of an atom trap configured to trap atoms in a processing zone above the structured electrode layer. The device further comprises at least four wires arranged in one or more metal layers beneath the structured electrode layer. The wires surround the processing zone and each of the wires comprises a first portion configured to carry an electrical current in a direction towards the processing zone and a second portion configured to carry the electrical current in a direction away from the processing zone.

A further aspect of the present disclosure relates to a method for manufacturing a device for controlling trapped atoms. The method comprises an act of forming at least four wires in one or more metal layers. The method further comprises an act of forming multiple electrodes of an atom trap in a structured electrode layer above the at least four wires. The atom trap is configured to trap atoms in a processing zone above the structured electrode layer. The wires surround the processing zone and each of the wires comprises a first portion configured to carry an electrical current in a direction towards the processing zone and a second portion configured to carry the electrical current in a direction away from the processing zone.

A further aspect of the present disclosure relates to a device for controlling trapped atoms, wherein the device is at least partially formed by a plurality of adjacent unit cells. Each of the unit cells comprises at least four wires connected in series, wherein each of the wires is associated with a different processing zone for processing trapped atoms and comprises a first portion configured to carry an electrical current in a direction towards the respective processing zone and a second portion configured to carry the electrical current in a direction away from the respective processing zone. Each of the unit cells further comprises a first via connection connected to a first end portion of the serially connected wires. Each of the unit cells further comprises a second via connection connected to a second end portion of the serially connected wires, wherein each of the first via connection and the second via connection extends in a direction perpendicular to the wires.

### Brief Description of the Drawings

Devices and methods in accordance with the disclosure are described in more detail below based on the drawings. The elements of the drawings are not necessarily to scale relative to each other. Similar reference numerals may designate corresponding similar parts. The technical features of the various illustrated examples may be combined unless they exclude each other and/or can be selectively omitted if not described to be necessarily required.
Figure 1 schematically illustrates a cross-sectional side view of a device 100 for controlling trapped atoms in accordance with the disclosure.
Figure 2 schematically illustrates a perspective view of a device 200 for controlling trapped atoms in accordance with the disclosure.
Figure 3 includes Figures 3A to 3D illustrating a magnetic field gradient and magnetic fields that may be generated in devices for controlling trapped atoms in accordance with the disclosure.
Figure 4 schematically illustrates a perspective view of a device 400 for controlling trapped atoms in accordance with the disclosure.
Figure 5 includes Figures 5A to 5C illustrating a magnetic field gradient and magnetic fields that may be generated in devices for controlling trapped atoms in accordance with the disclosure.
Figure 6 schematically illustrates a perspective view of a device 600 for controlling trapped atoms in accordance with the disclosure.
Figure 7 schematically illustrates a top view of a device 700 for controlling trapped atoms in accordance with the disclosure.
Figure 8 schematically illustrates a top view of a device 800 for controlling trapped atoms in accordance with the disclosure.
Figure 9 illustrates a flowchart of a method for manufacturing devices for controlling trapped atoms in accordance with the disclosure.

### Detailed Description

In the following, devices for controlling trapped atoms are described. It is to be noted that the following description is not restricted to atoms, but may also be applied to ions, molecules or other quantum particles/systems (e.g. electrons or defect centers). In particular, the devices described herein may be configured to provide the technical feature of a magnetic field gradient generated in the respective device. The devices described herein may be used for quantum computing in some examples. However, atom trap devices in accordance with the disclosure are not restricted to the application of quantum computing. The atom trap devices may also be used in other applications, such as e.g. atomic clocks.

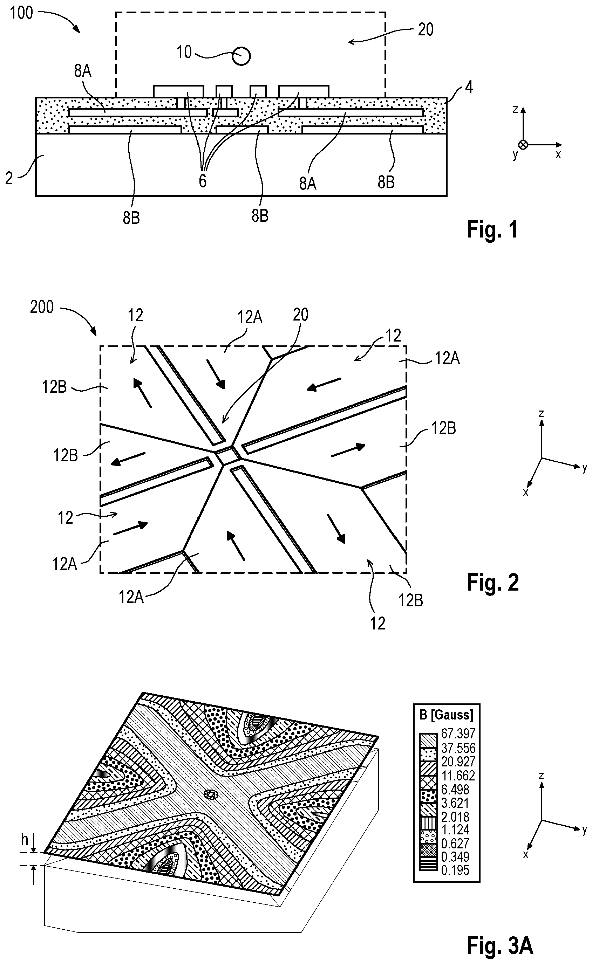

The device 100 for controlling trapped atoms of Figure 1 is illustrated in a general manner in order to qualitatively specify aspects of the disclosure. The device 100 may be extended by any of the aspects described in connection with other examples discussed herein. For example, Figures 2, 4 and 6 described later on illustrate more detailed portions of devices in accordance with the disclosure.

The device 100 may include a substrate 2, a dielectric layer 4 arranged over the substrate 2 and a structured electrode layer 6 arranged over the dielectric layer 4. In addition, the device 100 may include multiple metal layers 8A and 8B that may be at least partially embedded in the dielectric layer 4.

The structured electrode layer 6 may form multiple electrodes of an atom trap. For example, the structured electrode layer 6 may include or may be made of at least one of aluminum, copper and gold. The atom trap may be configured to trap one or a plurality of atoms 10 in a processing zone 20 located above the structured electrode layer 6. In the illustrated example, the processing zone 20 is qualitatively indicated by a dashed rectangle and only one atom 10 trapped in the processing zone 20 is shown for the sake of simplicity.

The locations of the atoms 10 may be controlled by electrical voltages applied to the structured electrode layer 6. For example, the atoms 10 may be moved (such as shuttled) in one or more lateral directions (e.g. in the x-y-plane) by means of AC and DC voltages that may be separately coupled to specific electrodes of the structured electrode layer 6. For example, the structured electrode layer 6 may include RF electrodes for RF trapping and DC electrodes for static electric-field trapping and/or for moving the atoms 10 within the atom trap. Atom traps as described herein may be configured to trap a plurality of atoms 10 that may be individually addressable and movable by appropriately controlling the electric potentials of the electrodes of the atom trap. In some cases, it may also be possible to move the atoms 10 in the z-direction, for example by changing electrode dimensions or voltages or externally applied fields.

In the illustrated example, the atom trap of the device 100 may correspond to a surface ion trap (or surface-electrode ion trap). In surface ion traps all electrodes (i.e. the DC electrodes and the RF electrodes) may be arranged in a same single plane. Such two-dimensional ion trap geometries may provide for a high scalability. However, it is to be noted that the concepts described herein are not restricted to surface ion traps. In further examples, devices for controlling trapped atoms in accordance with the disclosure may also be based on three-dimensional atom trap geometries.

The first metal layer 8A may be at least partially structured and may be arranged beneath the structured electrode layer 6. In particular, the first metal layer 8A may be arranged substantially parallel to the structured electrode layer 6. The first metal layer 8A may be configured to electrically connect the electrodes of the structured electrode layer 6 to external circuitry. In this regard, the structured first metal layer 8A may be electrically connected to the separate electrodes of the structured electrode layer 6 by via connections extending through the dielectric layer 4 in a vertical direction. Accordingly, the structured first metal layer 8A may be configured as an electrical redistribution layer which may allow for a formation of complex electrode structures and insular electrodes in the structured electrode layer 6.

The second metal layer 8B may be at least partially structured and may be arranged beneath the structured electrode layer 6. In particular, the second metal layer 8B may be arranged substantially parallel to the structured electrode layer 6. As will be discussed in more detail later on, the second metal layer 8B may include multiple electrically conductive wires (or conductors) that may be configured to generate a magnetic field gradient in the processing zone 20 when carrying electrical currents. Such wires may be referred to as current carrying wires. In the illustrated example, the second metal layer 8B may be arranged between the top surface of the substrate 2 and the first metal layer 8A. In further examples, the order of the metal layers 8A and 8B may be interchanged, i.e. the first metal layer 8A may be arranged between the top surface of the substrate 2 and the second metal layer 8B.

In the illustrated example, the device 100 may include an exemplary number of two metal layers 8A and 8B. However, in further examples, the device 100 may include an arbitrary number of additional metal layers that may be structured and may be at least partially interconnected by vertical via connections. For example, the previously described electrical redistribution layer included in the first metal layer 8A may also be formed in multiple structured metal layers. In a similar fashion, current carrying wires included in the second metal layer 8B are not restricted to be formed in only one metal layer, but may alternatively be included in several of the structured metal layers.

The substrate 2 may include or may be made of a dielectric material or a semiconductor material in one example. In particular, the substrate 2 may include at least one of sapphire, fused silica, quartz, silicon, or the like.

The dielectric layer 4 may include or may be made of an inorganic dielectric material in one example. In particular, the dielectric layer 4 may include at least one of silicon oxide, silicon nitride, or the like. In a further example, the dielectric layer 4 may include or may be made of polyimide.

One or multiple of the components of the device 100 may be at least partially manufactured based on a micro-fabrication technique. For example, one or more of the structured electrode layer 6 and the structured metal layers 8A, 8B may be formed based on a micro-fabrication technique. Micro-fabrication techniques (e.g. for electrode formation and structuring) may include one or more of photolithography processes (such as e.g. photoresist application, patterning, etching), deposition processes (such as e.g. CVD, PVD, sputtering), plating processes (such as e.g. electroless plating, galvanic plating), etching processes, or the like. Electrodes formed in the structured electrode layer 6 may be structured with micrometer or sub-micrometer scale precision and alignment accuracy, thereby allowing complex electrode layouts without loss of controllability of the trapped atoms 10. For example, the dielectric layer 4 may be formed by at least one of plasma CVD, thermal decomposition of tetraethyl orthosilicate (TEOS), or the like.

The processing zone 20 may include or may correspond to a gate zone for performing quantum gate operations on atoms (or ions) trapped in the gate zone. In this regard, the trapped atoms (or trapped ions) 10 may be used as qubits for performing quantum information processing. In order to carry out quantum information processing with trapped atoms 10, the qubits formed by the atoms 10 may be controlled using electromagnetic radiation. For example, long-wavelength radiation, such as microwaves or radio-waves, may be used for performing quantum information processing or implementing quantum gates. That is, the performed quantum gate operations may be microwave-based. In such case, many atoms may be irradiated using a single microwave source. Consequently, a microwave source configured to apply microwave radiation of different wavelengths to the processing zone 20 may be provided. The microwave source may or may not be considered as part of the device 100.

A necessary component of such microwave approach may be a magnetic field gradient provided in the processing zone 20 of the device 100 where the trapped atoms 10 may be located. In practice, a magnetic field gradient may be applied to a cooled (in particular linear) chain of trapped atoms 10, wherein the atoms 10 of the atom chain may serve as qubits distinguishable in frequency space such that they can be individually addressed. This distinguishability is a consequence of the change of the magnetic field along the ion crystal, resulting in position-dependent Zeeman splitting. In addition, the magnetic field gradient may, together with a microwave, induce a pair wise spin-spin coupling between the individual qubits. A particular example of such scheme may be referred to as Magnetic Gradient Induced Coupling (MAGIC). By using a MAGIC scheme, it may be possible to use microwave radiation instead of optical light (i.e. lasers) to control the trapped atoms, thus avoiding e.g. lack of device scalability. It is to be noted that the concepts described herein are not restricted to MAGIC, but may also be applied to other microwave-based gate schemes. In particular, the described concepts may also be applied to schemes using RF currents (instead of the DC currents used in MAGIC), such as e.g. NIST and others.

The device 200 for controlling trapped ions of Figure 2 may include some or all features of the device 100 of Figure 1. Figure 2 is intended to illustrate a more detailed example of electrically conductive wires 12 arranged in one or more metal layers beneath a structured electrode layer as previously discussed in connection with Figure 1. For example, the wires 12 of Figure 2 may be implemented in the device 100 of Figure 1. Referring back to Figure 1, the wires 12 may exemplarily be formed in the second metal layer 8B. For the sake of simplicity and for illustrative purposes, various components described in connection with Figure 1 are not shown in Figure 2, so as not to obscure the detailed implementation of the wires 12. Furthermore, Figure 2 only shows a detail of the device 200 as indicated by a dashed line surrounding the drawing.

In general, the device 200 may include at least four wires 12 arranged in one or more metal layers 8 beneath the structured electrode layer 6. In the illustrated case, the device 200 may include an exemplary number of four such wires 12. In a further specific example, the device 200 may include a number of eight wires 12. When carrying electrical currents the wires 12 may be configured to generate a magnetic field gradient in the processing zone 20 that may be required for performing quantum information processing as previously described. Exemplary directions of electrical currents flowing through the wires 12 are indicated by arrows. In a non-limiting example, an electrical current flowing through a wire 12 may have a value in a range from about 4A to about 6A, in particular a specific exemplary value of about 5A. For example, the current carrying wires 12 may include or may be made of at least one of aluminum, copper and gold.

In the illustrated example, the processing zone 20 may include a region above the small square in the center that is bounded by the four wires 12. When viewed in the z-direction the wires 12 may surround the processing zone 20 in which atoms for performing quantum information processing may be trapped. Due to such arrangement of the wires 12 the generated magnetic field gradient may be located in the processing zone 20 and may suitably extend across a plurality of trapped atoms 10 that may e.g. be arranged in form of a linear chain.

Each of the wires 12 may include a first portion 12A configured to carry an electrical current in a direction towards the processing zone 20. In addition, each of the wires 12 may include a second portion 12B configured to carry the electrical current in a direction away from the processing zone 20. For example, each of the wires 12 may form a u-shape or a v-shape. The u-shaped or v-shaped wires 12 may be arranged to completely surround the processing zone in particular. In the illustrated example, the wires 12 may be arranged (in particular directly) adjacent to each other. In this regard, it is to be understood that an appropriate electrical isolation between neighboring wires 12 may be provided.

As can be seen from the example of Figure 2 each of the wires 12 may taper in a direction towards the processing zone 20. Due to such tapering of the wires 12 a distance between the wires 12 and the processing zone 20 may be reduced. The generated magnetic field gradient may thus be well localized in the processing zone 20 above the wires 12. As can further be seen from the illustrated example a cross section of each wire 12 may increase in a direction pointing away from the processing zone 20. Such broadening of the wires 12 may provide for an increased cross section of the wires 12 in an area distant from the processing zone 20. The increased cross section of the wires 12 may lower heat generation, improve heat dissipation and prevent overheating in the processing zone region.

In the illustrated example, an arrangement of the four wires 12 may be symmetric. In particular, the four wires 12 may substantially have a discrete rotational symmetry of order four around a rotational axis extending in the z-direction. That is, the arrangement of the wires 12 may look the same when rotated by an integer multiple of 90 degrees around the rotational axis. In this regard, it is to be noted that the expression "substantially" is intended to indicate that the symmetry of the wires 12 may not be perfect in a strict geometrical or mathematical sense. Rather, the symmetry may also slightly deviate from a perfect mathematical symmetry when taking into account manufacturing tolerances in the fabrication of the wires 12. In a further example, the device 200 may include a number of eight wires that may be arranged in a symmetric fashion similar to the four wires of Figure 2. In this case, the eight wires may substantially have a discrete rotational symmetry of order eight around the rotational axis extending in the z-direction.

Figures 3A to 3D illustrate a magnetic field gradient and magnetic fields that may be generated in devices for controlling trapped atoms in accordance with the disclosure. The plotted data was obtained using a simulation software for the calculation of electric and magnetic fields. For example, a magnetic field gradient and magnetic fields similar to Figures 3A to 3D may be generated in the device 200 of Figure 2 using the current carrying wires 12 of Figure 2.

Figure 3A illustrates the generated magnetic fields (in units of [G]) in a plane having a height h of about 150pm above the surface of the atom trap. As can be seen a magnetic field gradient may be provided in the processing zone 20 at the specified height. In the non-limiting illustrated example, each of the wires 12 generating the magnetic field gradient may carry an electrical current of about 5A. Figure 3A shows that the generated magnetic field may be strongly confined along the u-structured wires 12. It is to be noted that, on the one hand, the longer the wires 12, the larger the magnetic field gradient may be. For thermal dissipation, broad but short leads may be reasonable. On the other hand, the magnetic field gradient may be most local when the wires 12 are thin and arranged close to each other.

As previously discussed in connection with Figure 1, a plurality of atoms may be trapped in the processing zone 20 of the atom trap. For example, the atom trap may be configured to trap a first chain of multiple atoms in the processing zone 20. The first chain of atoms may extend along a first direction parallel to the structured electrode layer 6 and may be spaced apart from the structured electrode layer 6 by a first distance (or height). In the examples of Figures 2 and 3A, the first chain of atoms may have a linear shape and may extend along the x-direction. Referring to Figure 3A, the first chain of atoms may e.g. be located at the height h of about 150pm where a suitable magnetic field gradient may be provided. The generated magnetic field gradient may extend in the x-direction across the first chain of atoms. Typical distances between the atoms in a chain may be a few micrometers.

In some examples, the atom trap may be configured to trap one or more additional chains of multiple atoms in the processing zone 20. For example, the atom trap may be configured to trap a second chain of multiple atoms in the processing zone 20. The second chain of atoms may extend in a second direction parallel to the structured electrode layer 6 and spaced apart from the structured electrode layer 6 by a second distance (or height) different from the first distance. In particular, the second chain of atoms may extend substantially perpendicular to the first chain of atoms. In the examples of Figures 2 and 3A, the second chain of atoms may have a linear shape and may e.g. extend along the y-direction. Due to the symmetry of the generated magnetic fields (and supposed that the magnetic fields at the second height may be similar to the magnetic fields at the first height h of about 150pm), a suitable magnetic field gradient may extend in the y-direction across the second chain of atoms. It is to be noted that the magnetic field (gradient) may strongly depend on the height. However, it may still have practicable values (even if different) at two different heights.

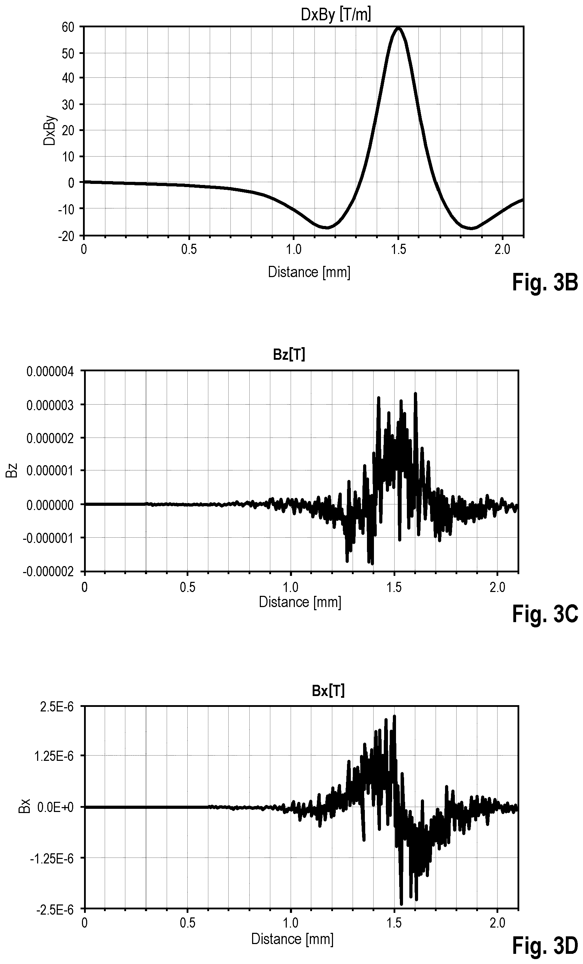

In Figure 3B, the gradient of the y-component of the magnetic field (By) (in units of [T/m]) is plotted against the x-coordinate (in units of [mm]). Similar to Figure 3A the magnetic field gradient is shown at a height of about 150pm where it may extend along a linear ion chain extending in the x-direction. In the illustrated example, the center of the ion chain may exemplarily be located at the x-coordinate of 1.5 mm.

In Figures 3C and 3D, the z-component of the magnetic field (Bz) and the x-component of the magnetic field (Bx) are plotted against the x-coordinate (in units of [mm]), respectively. As can be seen the vertical magnetic fields may be (effectively) zero along the ion chain. Referring back to Figure 3B, it becomes apparent that the generated magnetic field always shows in the y-direction along the ion chain we consider here. More generally, the magnetic field may show in the direction perpendicular to the ion chain.

Devices for controlling trapped atoms in accordance with the disclosure may provide the following technical effects and may outperform conventional devices in various aspects.

Devices in accordance with the disclosure may be configured to provide comparably high magnetic field gradients. In the examples of Figures 2 and 3, the generated magnetic field gradient may have values of up to 60T/m (see e.g. Figure 3B), for the case of an atom chain arranged at a height of about 150pm and electrical currents through the wires 12 of about 5A. Conventional devices may not be configured to provide the possibility of tapered wires (for example due to geometrical constraints). Due to conventional tapering possibilities maximal values for the electrical currents generating the magnetic field gradient may be smaller compared to devices in accordance with the disclosure.

Devices in accordance with the disclosure may be configured to provide a constant direction of the magnetic field along a chain of atoms trapped in the processing zone (see e.g. Figure 3). The direction of the magnetic field may fix the polarization direction corresponding to transitions between the atom states (or ion states) defining the quantization axis. The direction of the magnetic field direction should possibly be constant so that the polarization direction of the microwaves does not have to change from atom to atom (or from ion to ion).

Devices in accordance with the disclosure may be configured to provide magnetic fields parallel to the chip surface, i.e. parallel to the structured electrode layer 6. In some conventional devices the magnetic field may be parallel to the chip surface only at the center of the atom chain. In contrast to this, atom trap devices as described herein may provide such parallel magnetic field along the entire length of the atom chain (see e.g. Figure 3).

Devices in accordance with the disclosure may be configured to provide different magnetic field amplitudes along trapped atom chains. The amplitude of an external magnetic field at the position of the respective atom in the atom chain may fix an energy gap between the up and down states of the qubits. Accordingly, when each of the atoms sees a different magnetic field amplitude, the atoms may be individually addressable.

Devices in accordance with the disclosure may be configured to provide a well localized magnetic field (see e.g. Figure 3B). An exemplary value for the area where the magnetic field gradient is localized may be about 1-2 mm² which may be much smaller than the area of the chip and may provide the opportunity of many processing zones on one chip. A well localized magnetic field may be required for scalability of the device. Different zones on an atom trap chip should be independently used, i.e. the magnetic field of one zone should be separate from the magnetic field of an adjacent zone. For example, a distance between zones may be in a range from about 1mm to about 2mm. As can e.g. be seen from Figure 3B, the magnetic field provided by a device in accordance with the disclosure fulfills such requirement.

Devices in accordance with the disclosure may be configured to provide magnetic field gradients as previously discussed. In particular, the generated magnetic field gradients may be static magnetic field gradients. However, it is to be noted that the concepts presented herein may also be useful for radio frequency (RF) magnetic field gradients oscillating at a frequency of about 1GHz and below, as at such frequency the instantaneous magnetic field amplitude may be close to the static case.

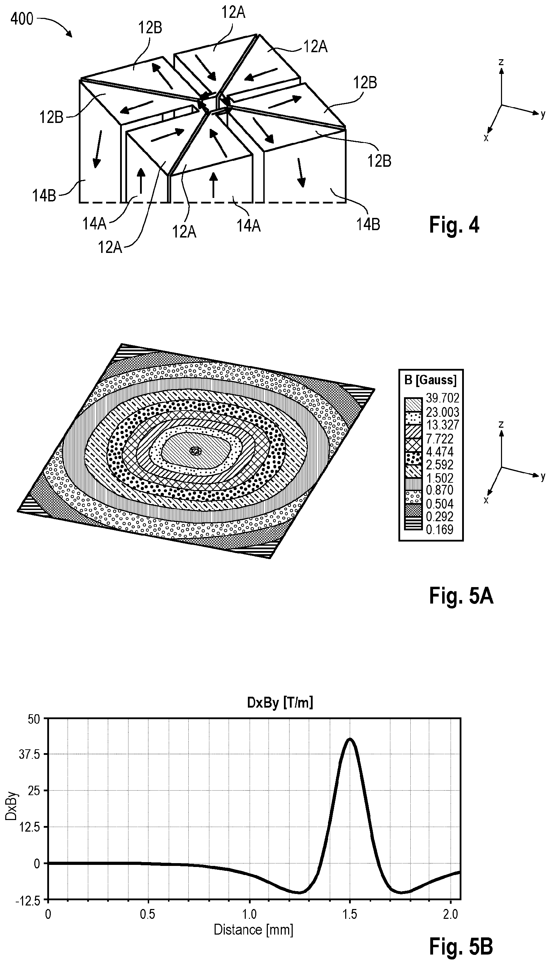

The device 400 for controlling trapped ions of Figure 4 may include some or all features of previously described devices. In particular, the device 400 may include multiple wires 12 similar to Figure 2. In addition, the device 400 may include a plurality of first via connections 14A and second via connections 14B that may be electrically connected to first portions 12A and second portions 12B of the wires 12, respectively. Referring back to Figure 1, the via connections 14A, 14B may at least partially extend through the substrate 2 and may thus also be referred to as through-substrate vias. It is to be noted that, for illustrative purposes, various components of the device 400 are not shown in Figure 4 so as not to obscure the detailed implementation of the wires 12 and the via connections 14.

In the illustrated example, the device 400 may include an exemplary number of four wires 12, wherein for each of the wires 12 the first portion 12A and the second portion 12B may be arranged in the x-y-plane, i.e. in a plane substantially parallel to the structured electrode layer 6. The first via connection 14A and the second via connection 14B may extend in the z-direction, i.e. substantially perpendicular to the wires 12. Compared to the example of Figure 2, an area of the wires 12 may be reduced when viewed in the z-direction. Exemplary directions of the electrical currents flowing through the wire portions 12A, 12B and the via connections 14A, 14B are indicated by arrows.

Figures 5A to 5C illustrate a magnetic field gradient and magnetic fields that may be generated in devices for controlling trapped atoms in accordance with the disclosure. The plotted data was obtained using a simulation software for the calculation of electric and magnetic fields. For example, a magnetic field gradient and magnetic fields similar to Figures 5A to 5C may be generated in the device 400 of Figure 4 using the current carrying wires 12 and the via connections 14 of Figure 4.

Figure 5A illustrates magnetic fields (in units of [G]) generated in the processing zone 20 above the surface of the atom trap. Similar to the example of Figure 3A, a magnetic field gradient may be provided in the processing zone 20. As can be seen the magnetic field may be highly symmetric with respect to a rotational axis extending in the z-direction. Due to the symmetry of the generated magnetic fields, the device 400 may be configured to provide a suitable magnetic field gradient for one or multiple chains of atoms trapped in the processing zone 20. For example, a first chain of atoms may extend in the x-direction (at a first height) while a second chain of atoms may extend in the y-direction (at a different second height).

In Figure 5B, the gradient of the y-component of the magnetic field (By) (in units of [T/m]) is plotted against the x-coordinate (in units of [mm]). The magnetic field gradient may extend along a linear atom chain extending in the x-direction. In the illustrated example, the center of the ion chain may exemplarily be located at the x-coordinate of 1.5 mm. A comparison with the example of Figure 3B shows that the usage of via connections 14 as shown in Figure 4 may provide an improved localizability of the magnetic field and its gradient while the values of the magnetic field gradient may be decreased but may still be high.

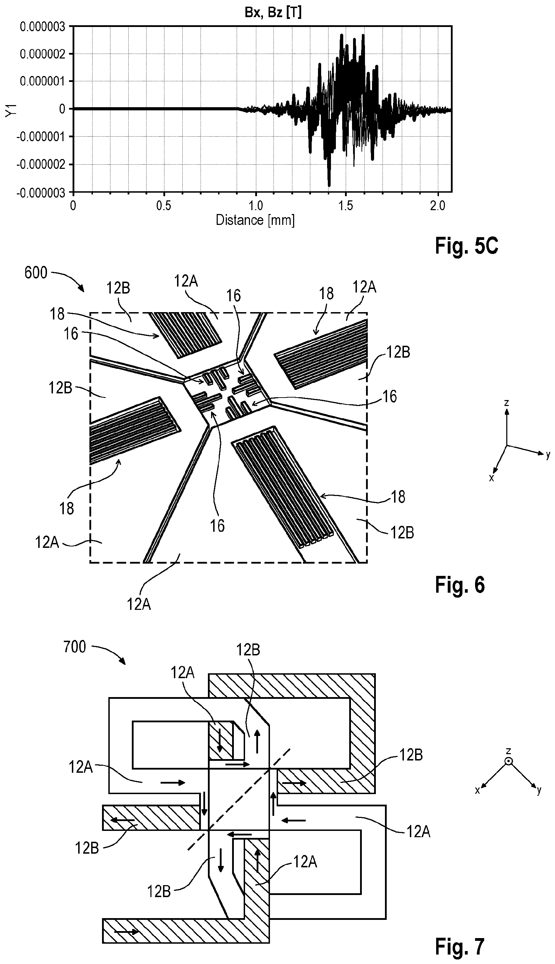

In Figure 5C, the z-component of the magnetic field (Bz) and the x-component of the magnetic field (Bx) are plotted against the x-coordinate (in units of [mm]) in form of a thin solid line and a bold solid line. As can be seen the vertical magnetic fields may be (effectively) zero along the atom chain. Referring back to Figure 5B, it becomes apparent that the generated magnetic field always shows in y-direction along the atom chain.

The device 600 for controlling trapped ions of Figure 6 may include some or all features of previously described devices. In particular, the device 600 may include multiple wires 12 similar to Figure 2. Each of the wires 12 may include a first set of electrically conductive fingers 16. The electrically conductive fingers 16 may be arranged at a transition between the first portion 12A and the second portion 12B of the respective wire 12. In particular, the fingers 16 may be in direct electrical and mechanical contact with the respective finger 12. In this regard, the electrically conductive fingers 16 and the wires 12 may be manufactured from a same material.

In the illustrated example, each of the wires 12 may be u-shaped and may include a portion connecting its first portion 12A and second portion 12B. In particular, the connecting portion may be substantially perpendicular to the first portion 12A and second portion 12B. The electrically conductive fingers 16 may be arranged at this connecting portion and thus at the tip of the respective u-shaped wire 12. The fingers 16 may point in a direction towards the processing zone 20 (when viewed in the z-direction). In the non-limiting illustrated example, each first set of fingers 16 may include an exemplary number of three fingers 16 that may differ in length. In further examples, the number and lengths of the fingers 16 may be chosen differently.

In order to generate sufficiently high magnetic field gradients, high current densities may be required which may result in high heat dissipation. As a result, the highest temperature increase may occur near the processing zone 20 where the wires 12 taper, which may be detrimental for the fidelity of performed quantum gate operations. The electrically conductive fingers 16 near the processing zone 20 may be configured to provide improved thermal properties of the tapered wires 12 close to the trapping region. The electrically conductive fingers 16 may be thin enough to not strongly influence the generated magnetic fields. That is, no substantial currents may flow inside the electrically conductive fingers 16. The additional volume of electrically conductive material may reduce a maximum temperature in the trapping region.

Additionally, or alternatively, each of the wires 12 may include a second set of electrically conductive fingers 18. The fingers 18 may be arranged between the first portion 12A and the second portion 12B of the respective wire 12, wherein the second set of fingers 18 may point in a direction away from the processing zone 20 (when viewed in the z-direction). In particular, the fingers 18 may be in direct electrical and mechanical contact with the respective finger 12. In this regard, the electrically conductive fingers 18 and the wires 12 may particularly be manufactured from a same material. In the non-limiting illustrated example, each second set of electrically conductive fingers 18 may include an exemplary number of six fingers 16 of similar length. In further examples, the number and lengths of the fingers 18 may be chosen differently. Similar to the first set of fingers 16, the second set of fingers 18 may be configured to improve thermal properties of the tapered wires 12.

The device 700 for controlling trapped ions of Figure 7 may include some or all features of previously described devices. Similar to previous examples the device 700 may include an exemplary number of four wires 12, each including a first portion 12A and a second portion 12B. In contrast to previous examples the four wires 12 may be connected in series. As such, the four wires 12 may also be regarded as one single wire. A chain of atoms arranged in the processing zone 20 may exemplarily extend in the x-direction as indicated by a dashed line in Figure 7.

When using independent (i.e. not connected) wires, the amplitude of the electrical current in each wire may fluctuate independently. Such fluctuation may be prevented by using serially connected wires 12 as exemplarily shown in Figure 7. Note that, in the top view of Figure 7, different portions of the wires 12 may intersect. In this connection, a first portion of the serially connected wires may extend below a second portion of the serially connected wires. That is, the intersecting portions of the serially connected wires may be arranged at different z-coordinates.

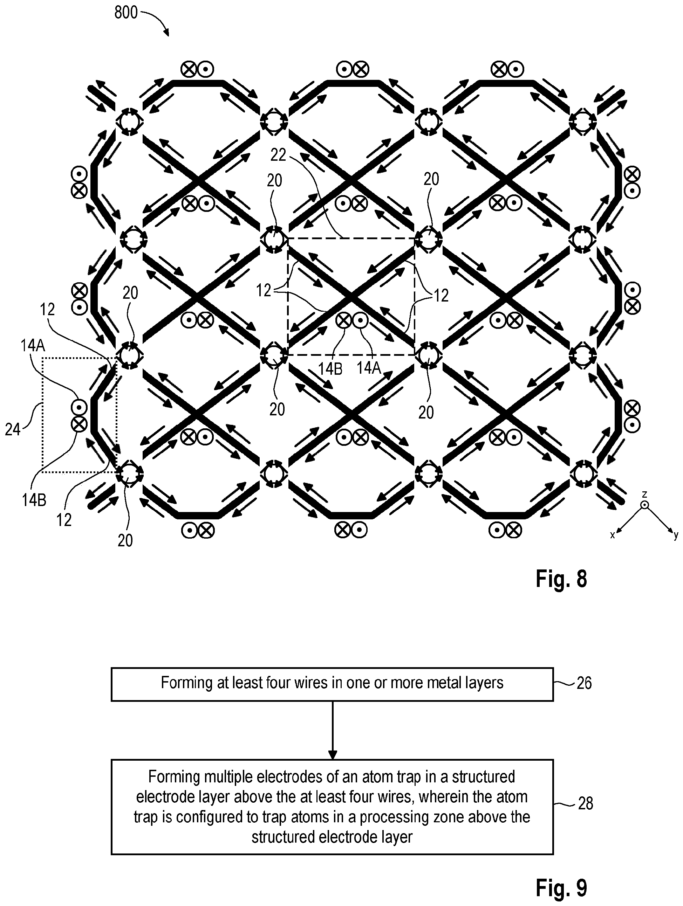

The previously discussed concepts may provide a straightforward and easy scaling of atom trap devices in order to become larger. Figure 8 is meant to illustrate a possible realization of such atom trap device scaling. The device 800 for controlling trapped ions of Figure 8 may include some or all features of previously described devices.

The device 800 may be at least partially formed by a plurality of adjacent (or neighboring) unit cells 22. In Figure 8, an exemplary unit cell 22 is indicated by a dashed rectangle. For example, the device 800 may be formed by arranging a plurality of such unit cells 22 in a side by side manner in the x-y-plane.

In the illustrated example, a unit cell 22 may include an exemplary number of four wires 12 that may be electrically connected in series. The wires 12 may be arranged in the x-y-plane and may be at least partially formed as described in previous examples. In particular, the wires 12 may be serially connected with each other similar to the example of Figure 7. Each of the wires 12 may be associated with a different processing zone 20 for processing trapped atoms, the processing zones 20 of the illustrated example being represented by small circles. Similar to previous examples, each of the wires 12 may include a first portion configured to carry an electrical current in a direction towards the respective processing zone 20 and a second portion configured to carry the electrical current in a direction away from the respective processing zone 20. For the sake of simplicity, the wires 20 are simply represented by solid lines, wherein the first portion and the second portion of the respective wire are not explicitly shown.

Each of the wires 12 may be configured to contribute to the generation of a magnetic field gradient in the respective processing zone 20 when the serially connected wires 12 carry an electric current. Exemplary directions of electrical currents flowing through the wires 12 are indicated by arrows. It is to be noted that a magnetic field gradient of a specific processing zone 20 may be generated by four wires 12 of four different adjacent unit cells 22, the four wires extending in a direction towards the processing zone 20. The four wires 12 of a unit cell 22 may be configured to contribute to the generation of magnetic field gradients in four different processing zones 20.

A unit cell 22 may further include a first via connection 14A connected to a first end portion of the serially connected wires 12 and a second via connection 14B connected to a second end portion of the serially connected wires 12. In the illustrated example, each of the first via connection 14A and the second via connection 14B may extend in a direction perpendicular to the wires 12 (i.e. in the z-direction). The four wires 12 may form an x-shape, wherein the two via connections 14A, 14B may be arranged at a junction of the x-shape formed by the wires 12. During an operation of the device 800, an electrical current may be provided to the serially connected wires 12 via the first via connection 14A. The electrical current may then flow through the serially connected wires 12 as indicated by arrows in Figure 8, thereby contributing to the generation of magnetic field gradients in the four adjacent processing zones 20. The electrical current may leave the unit cell 22 via the second via connection 14B.

The device 800 may further include a second type of cell 24 that may be arranged at a periphery of the device 800. In Figure 8, one such exemplary peripheral cell 24 is indicated by a dotted rectangle. A peripheral cell 24 may include two wires 12 connected in series, wherein each of the wires 12 may be associated with a different processing zone 20. Each of the wires 12 of the peripheral cell 24 may be configured to contribute to generating a magnetic field gradient in the two adjacent processing zones 20 when the serially connected wires 12 carry an electric current. Similar to the unit cells 22, a peripheral cell 24 may further include a first via connection 14A connected to a first end portion of the serially connected wires 12 and a second via connection 14B connected to a second end portion of the two serially connected wires 12.

In the illustrated non-limiting example, the device 800 may include an exemplary number of nine unit cells 22 and an exemplary number of twelve peripheral cells 24. In general, the number of independent wires 12 may scale as (n+1)² for a grid of n times n processing zones 20. In the illustrated example, n is four, i.e. there are sixteen processing zones 20 so that the number of independent wires 12 is twenty-five.

Figure 9 illustrates a flowchart of a method for manufacturing a device for controlling trapped atoms in accordance with the disclosure. The method may be used for fabricating any of the previously described devices and may thus be read in connection with preceding figures. The following description uses reference numerals of previously described examples. The method of Figure 9 is described in a general manner in order to qualitatively specify aspects of the disclosure. It is understood that the method may be extended by any of the aspects described in connection with other examples in accordance with the disclosure.

At 26, at least four wires 12 may be formed in one or more metal layers 8. At 28, multiple electrodes of an atom trap may be formed in a structured electrode layer 6 above the at least four wires 12. The atom trap may be configured to trap atoms in a processing zone 20 above the structured electrode layer 6. The wires 12 may surround the processing zone 20 and each of the wires 12 may include a first portion 12A configured to carry an electrical current in a direction towards the processing zone 20 and a second portion 12B configured to carry the electrical current in a direction away from the processing zone 20.

### Examples

In the following, devices for controlling trapped atoms and methods for manufacturing thereof are described by means of examples.

Example 1 is a device for controlling trapped atoms, the device comprising: a structured electrode layer, wherein the structured electrode layer forms multiple electrodes of an atom trap configured to trap atoms in a processing zone above the structured electrode layer; at least four wires arranged in one or more metal layers beneath the structured electrode layer, wherein the wires surround the processing zone and each of the wires comprises a first portion configured to carry an electrical current in a direction towards the processing zone and a second portion configured to carry the electrical current in a direction away from the processing zone.

Example 2 is a device according to Example 1, wherein the wires are configured to generate a magnetic field gradient in the processing zone when carrying electrical currents.

Example 3 is a device according to Example 1 or 2, further comprising: a microwave source configured to apply microwave radiation of different wavelengths to the processing zone.

Example 4 is a device according to Example 3, wherein the processing zone comprises a gate zone for performing microwave-based quantum gate operations on atoms trapped in the gate zone.

Example 5 is a device according to one of the preceding Examples, wherein each of the wires forms a u-shape or a v-shape.

Example 6 is a device according to one of the preceding Examples, wherein the at least four wires are a number of n wires, wherein the n wires substantially have a discrete rotational symmetry of order n around a rotational axis perpendicular to the structured electrode layer.

Example 7 is a device according to one of the preceding Examples, at least one of: at least one of the wires tapers in a direction towards the processing zone, a cross section of at least one of the wires increases in a direction away from the processing zone, the wires completely surround the processing zone, the wires are connected in series, or the one or more metal layers are arranged parallel to the structured electrode layer.

Example 8 is a device according to one of the preceding Examples, wherein for at least one of the wires: the first portion and the second portion of the respective wire are electrically connected to a first via connection and a second via connection, respectively, wherein each of the first via connection and the second via connection extends in a direction perpendicular to the structured electrode layer.

Example 9 is a device according to one of the preceding Examples, wherein at least one of the wires comprises at least one of: a first set of electrically conductive fingers arranged at a transition between the first portion and the second portion of the respective wire, wherein the first set of fingers points in a direction towards the processing zone, or a second set of electrically conductive fingers arranged between the first portion and the second portion of the respective wire, wherein the second set of fingers points in a direction away from the processing zone.

Example 10 is a device according to one of the preceding Examples, wherein: the atom trap is configured to trap a first chain of multiple atoms in the processing zone, the first chain of atoms extending along a first direction parallel to the structured electrode layer and spaced apart from the structured electrode layer by a first distance, and the magnetic field gradient extends in the first direction across the first chain of atoms.

Example 11 is a device according to Example 10, wherein: the atom trap is configured to trap a second chain of multiple atoms in the processing zone, the second chain of atoms extending in a second direction parallel to the structured electrode layer and spaced apart from the structured electrode layer by a second distance different from the first distance, and the magnetic field gradient extends in the second direction across the second chain of atoms, and/or the second chain of atoms extends perpendicular to the first chain of atoms.

Example 12 is a device according to one of the preceding Examples, wherein the atom trap is a surface atom trap and/or the magnetic field gradient is a static magnetic field gradient.

Example 13 is a method for manufacturing a device for controlling trapped atoms, the method comprising: forming multiple electrodes of an atom trap in a structured electrode layer, wherein the atom trap is configured to trap atoms in a processing zone above the structured electrode layer; forming at least four wires in one or more metal layers beneath the structured electrode layer, wherein the wires surround the processing zone and each of the wires comprises a first portion configured to carry an electrical current in a direction towards the processing zone and a second portion configured to carry the electrical current in a direction away from the processing zone.

Example 14 is a device for controlling trapped atoms, wherein the device is at least partially formed by a plurality of adjacent unit cells, wherein each of the unit cells comprises: at least four wires connected in series, wherein each of the wires is associated with a different processing zone for processing trapped atoms and comprises a first portion configured to carry an electrical current in a direction towards the respective processing zone and a second portion configured to carry the electrical current in a direction away from the respective processing zone; a first via connection connected to a first end portion of the serially connected wires; and a second via connection connected to a second end portion of the serially connected wires, wherein each of the first via connection and the second via connection extends in a direction perpendicular to the wires.

Example 15 is a device according to Example 14, wherein each of the wires is configured to contribute to generating a magnetic field gradient in the respective processing zone when the serially connected wires carry an electric current.

Example 16 is a device according to Example 14 or 15, wherein the at least four wires form an x-shape and the two via connections are arranged at a junction of the x-shape.

The features of the various examples described herein may be combined with each other unless specifically noted otherwise.

As used in this specification, the terms "electrically connected" or "electrically coupled" or similar terms are not meant to mean that the elements are directly connected together; intervening elements may be provided between the "electrically connected" or "electrically coupled" elements, respectively. However, in accordance with the disclosure, the above-mentioned and similar terms may, optionally, also have the specific meaning that the elements are directly connected together, i.e. that no intervening elements are provided between the "electrically connected" or "electrically coupled" elements, respectively.

Further, the words "over" or "under" with regard to a part, element or material layer formed or located or arranged "over" or "under" a surface may be used herein to mean that the part, element or material layer be located (e.g. placed, formed, arranged, deposited, etc.) "directly on" or "directly under", e.g. in direct contact with, the implied surface. The word "over" or "under" used with regard to a part, element or material layer formed or located or arranged "over" or "under" a surface may, however, either be used herein to mean that the part, element or material layer be located (e.g. placed, formed, arranged, deposited, etc.) "indirectly on" or "indirectly under" the implied surface, with one or multiple additional parts, elements or layers being arranged between the implied surface and the part, element or material layer.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A device for controlling trapped atoms, the device comprising:
a structured electrode layer (6), wherein the structured electrode layer (6) forms multiple electrodes of an atom trap configured to trap atoms in a processing zone (20) above the structured electrode layer (6);
at least four wires (12) arranged in one or more metal layers (8) beneath the structured electrode layer (6),
wherein the wires (12) surround the processing zone (20) and each of the wires (12) comprises a first portion (12A) configured to carry an electrical current in a direction towards the processing zone (20) and a second portion (12B) configured to carry the electrical current in a direction away from the processing zone (20).

2. The device of claim 1, wherein the wires (12) are configured to generate a magnetic field gradient in the processing zone (20) when carrying electrical currents.

3. The device of claim 1 or 2, further comprising:
a microwave source configured to apply microwave radiation of different wavelengths to the processing zone (20) .

4. The device of claim 3, wherein the processing zone (20) comprises a gate zone for performing microwave-based quantum gate operations on atoms trapped in the gate zone.

5. The device of one of the preceding claims, wherein each of the wires (12) forms a u-shape or a v-shape.

6. The device of one of the preceding claims, wherein the at least four wires (12) are a number of n wires (12), wherein the n wires (12) substantially have a discrete rotational symmetry of order n around a rotational axis perpendicular to the structured electrode layer (6).

7. The device of one of the preceding claims, at least one of:
at least one of the wires (12) tapers in a direction towards the processing zone (20),
a cross section of at least one of the wires (12) increases in a direction away from the processing zone (20),
the wires (12) completely surround the processing zone (20),
the wires (12) are connected in series, or
the one or more metal layers (8) are arranged parallel to the structured electrode layer (6).

8. The device of one of the preceding claims, wherein for at least one of the wires (12):
the first portion (12A) and the second portion (12B) of the respective wire (12) are electrically connected to a first via connection (14A) and a second via connection (14B), respectively, wherein each of the first via connection (14A) and the second via connection (14B) extends in a direction perpendicular to the structured electrode layer (6).

9. The device of one of the preceding claims, wherein at least one of the wires (12) comprises at least one of:
a first set of electrically conductive fingers (16) arranged at a transition between the first portion (12A) and the second portion (12B) of the respective wire (12), wherein the first set of fingers (16) points in a direction towards the processing zone (20), or
a second set of electrically conductive fingers (18) arranged between the first portion (12A) and the second portion (12B) of the respective wire (12), wherein the second set of fingers (18) points in a direction away from the processing zone (20).

10. The device of one of the preceding claims, wherein:
the atom trap is configured to trap a first chain of multiple atoms in the processing zone (20), the first chain of atoms extending along a first direction parallel to the structured electrode layer (6) and spaced apart from the structured electrode layer (6) by a first distance, and
the magnetic field gradient extends in the first direction across the first chain of atoms.

11. The device of claim 10, wherein:
the atom trap is configured to trap a second chain of multiple atoms in the processing zone (20), the second chain of atoms extending in a second direction parallel to the structured electrode layer (6) and spaced apart from the structured electrode layer (6) by a second distance different from the first distance, and
the magnetic field gradient extends in the second direction across the second chain of atoms, and/or
the second chain of atoms extends perpendicular to the first chain of atoms.

12. The device of one of the preceding claims, wherein the atom trap is a surface atom trap and/or the magnetic field gradient is a static magnetic field gradient.

13. A method for manufacturing a device for controlling trapped atoms, the method comprising:
forming at least four wires (12) in one or more metal layers (8);
forming multiple electrodes of an atom trap in a structured electrode layer (6) above the at least four wires (12), wherein the atom trap is configured to trap atoms in a processing zone (20) above the structured electrode layer (6),
wherein the wires (12) surround the processing zone (20) and each of the wires (12) comprises a first portion (12A) configured to carry an electrical current in a direction towards the processing zone (20) and a second portion (12B) configured to carry the electrical current in a direction away from the processing zone (20).

14. A device for controlling trapped atoms, wherein the device is at least partially formed by a plurality of adjacent unit cells (22), wherein each of the unit cells (22) comprises:
at least four wires (12) connected in series, wherein each of the wires (12) is associated with a different processing zone (20) for processing trapped atoms and comprises a first portion (12A) configured to carry an electrical current in a direction towards the respective processing zone (20) and a second portion (12B) configured to carry the electrical current in a direction away from the respective processing zone (20);
a first via connection (14A) connected to a first end portion of the serially connected wires (12); and
a second via connection (14B) connected to a second end portion of the serially connected wires (12), wherein each of the first via connection (14A) and the second via connection (14B) extends in a direction perpendicular to the wires (12).

15. The device of claim 14, wherein each of the wires (12) is configured to contribute to generating a magnetic field gradient in the respective processing zone (20) when the serially connected wires (12) carry an electric current.

16. The device of claim 14 or 15, wherein the at least four wires (12) form an x-shape and the two via connections (14A, 14B) are arranged at a junction of the x-shape.
